# EUROPÄISCHE PATENTSCHRIFT

(11) **EP 4 305 697 B1**
(45) Veröffentlichungstag und Bekanntmachung des Hinweises auf die Patenterteilung: **27.11.2024**
(21) Anmeldenummer: 22708397.9
(22) Anmeldetag: 02.02.2022
(51) Int. Cl.: H01M 8/2404, H01M 8/04537, H01M 8/10, H01M 8/0202

(54) **BRENNSTOFFZELLENEINHEIT**
FUEL CELL UNIT
UNITÉ DE PILES À COMBUSTIBLE

(30) Priorität: 08.03.2021 DE 102021202185
(43) Veröffentlichungstag der Anmeldung: 17.01.2024
(73) Patentinhaber: Robert Bosch GmbH, 70442 Stuttgart (DE)
(72) Erfinder: RINGEL, Anton, 96047 Bamberg (DE); RINGK, Andreas, 96047 Bamberg (DE)
(86) Internationale Anmeldenummer: PCT/EP2022/052420
(87) Internationale Veröffentlichungsnummer: WO 2022/189072

(56) Entgegenhaltungen:
- DE-A1- 102015 016 779
- DE-A1- 102018 110 870
- DE-T5- 112008 000 654
- US-A1- 2018 241 068

## Beschreibung

Die vorliegende Erfindung betrifft eine Brennstoffzelleneinheit gemäß dem Oberbegriff des Anspruches 1 und ein Verfahren zur Herstellung einer Brennstoffzelleneinheit gemäß dem Oberbegriff des Anspruches 7.

### Stand der Technik

Brennstoffzelleneinheiten als galvanische Zellen wandeln mittels Redoxreaktionen an einer Anode und Kathode kontinuierlich zugeführten Brennstoff und Oxidationsmittels in elektrische Energie um. Brennstoffzellen werden in den unterschiedlichsten stationären und mobilen Anwendungen eingesetzt, beispielsweise in Häusern ohne Anschluss an ein Stromnetz oder in Kraftfahrzeugen, im Schienenverkehr, in der Luftfahrt, in der Raumfahrt und in der Schifffahrt. In Brennstoffzelleneinheiten sind eine Vielzahl von Brennstoffzellen übereinander in einem Stapel als Stack angeordnet.

Für einen ordnungsgemäßen und zuverlässigen Betrieb der Brennstoffzelleneinheit ist es notwendig, wenigstens einen Parameter der Brennstoffzellen, beispielsweise die Spannung und die Feuchtigkeit der Brennstoffzellen, zu überwachen. Die Feuchtigkeit wird beispielsweise mit der Impedanz als weiteren Parameter mittelbar bestimmt. Bei der Überwachung beispielsweise der Spannung wird die anliegende Spannung an den Bipolarplatten der Brennstoffzellen mittels Stromleitungen zu einer Stromabnehmerleiste und einem Kabelbaum als Datenübertragungsvorrichtungen geleitet und von den Datenübertragungsvorrichtungen zu einer zentralen Überwachungseinheit als Fuel Cell Control Unit übertragen, so dass die Daten für den Parameter der Spannung die Spannung des in Stromleitungen geleiteten Stromes selbst ist.

Eine Brennstoffzelleneinheit mit 400 übereinander angeordneten Brennstoffzellen umfasst 401 Bipolarplatten und jede Bipolarplatte ist mechanisch und elektrisch mittels Verbindungselementen mit je einer Stromleitung zu verbunden. Aus diesem Grund sind insgesamt 401 Stromleitungen mittels 401 Verbindungselementen mit 401 Bipolarplatten zu verbinden. An den Enden der Stromleitungen sind Pins als Verbindungselemente ausgebildet und diese Pins werden in Bohrungen oder Öffnungen als Gegenverbindungselementen in den Bipolarplatten gesteckt, so dass form- und/oder kraftschlüssige Fixierungen zwischen den Verbindungselementen und Gegenverbindungselementen ausgebildet werden. Die Stromleitungen sind mit den Pins und Bohrungen somit form- und/oder kraftschlüssig an den Bipolarplatten fixiert und elektrisch leitend mit den Bipolarplatten verbunden. Die Bipolarplatten weisen eine Dicke von ca. 1 mm auf und die Bohrungen in den Bipolarplatten sind mit einem Durchmesser von ungefähr 0,7 mm ausgebildet. Die Pins werden manuell von Facharbeitern in die Bohrungen der Bipolarplatten gesteckt, so dass dieser Arbeitsvorgang aufwendig mit einem hohen Fehler- und Beschädigungsrisiko ist. Dabei können die Pins als die Verbindungselemente auch bei einer Fehlmontage nicht in die Bohrungen oder Öffnungen eingesteckt werden, sondern zwischen den Bipolarplatten, so dass ein Kurzschluss zwischen den Bipolarplatten auftritt. Bei dieser Fehlmontage sind die Pins analog wie bei einer korrekten Montage in den Bohrungen und Öffnungen optisch im Wesentlich nicht erfassbar bzw. sichtbar, so dass eine optische Prüfung einer Fehlmontage der Pins nicht möglich ist.

Die DE 10 2019 220 527 A1 zeigt eine Zelleneinheit als Zellenstapel zur Wandlung elektrochemischer Energie umfassend übereinander angeordnete Einzelzellen, eine Überwachungseinheit als Recheneinheit zur Überwachung von wenigstens einem Parameter der Einzelzellen, wenigstens eine Datenübertragungsvorrichtung zur Übertragung von Daten hinsichtlich des wenigstens einen Parameters von den Einzelzellen zu der Überwachungseinheit. wobei die Zelleneinheit mehrere Zusatzüberwachungseinheiten als Recheneinheiten zur Überwachung von wenigstens einem Parameter der Einzelzellen und wenigstens eine Datenübertragungsvorrichtung zur Übertragung von Daten hinsichtlich des wenigstens einen Parameters von den Einzelzellen zu den Zusatzüberwachungseinheiten umfasst, wobei die

Zusatzüberwachungseinheiten jeweils einen Energiespeicher aufweisen.

DE 10 2018 110870 A1 beschreibt eine Kontaktierung von Platten eines Zellstapels mit Hilfe von Klemmvorrichtungen, die parallel zueinander angeordnet sind und die jeweils eine Zelle kontaktieren.

### Offenbarung der Erfindung

### Vorteile der Erfindung

Erfindungsgemäße Brennstoffzelleneinheit als Brennstoffzellenstapel zur elektrochemischen Erzeugung von elektrischer Energie, umfassend gestapelt angeordnete Brennstoffzellen mit Protonenaustauschermembranen, Anoden, Kathoden, Gasdiffusionssichten und Bipolarplatten, Stromleitungen zur elektrischen Verbindung mit den Bipolarplatten der Brennstoffzellen und zur Überwachung der Brennstoffzellen mittels einer Erfassung wenigstens eines Parameters der Brennstoffzellen und die Stromleitungen elektrisch mit Verbindungselementen verbunden sind, Verbindungselemente zur Befestigung an den Bipolarplatten mit Fixierungen sowie zur elektrisch leitenden Verbindung mit den Bipolarplatten und die Verbindungselemente elektrisch leitend mit den Stromleitungen verbunden sind, so dass die Stromleitungen elektrisch leitend mittels der Verbindungselemente mit den Bipolarplatten verbunden sind, an den Bipolarplatten ausgebildete Gegenverbindungselemente und an den Gegenverbindungselementen die Verbindungselemente mit Fixierungen befestigt sind, so dass die Verbindungselemente elektrisch leitend mit den Gegenverbindungselementen und Bipolarplatten verbunden sind, wobei an den Bipolarplatten Indikatorelemente ausgebildet sind zur optischen Überwachung der ordnungsgemäßen Anordnung der Verbindungselemente an den Gegenverbindungselementen und die Indikatorelemente von außerhalb des Brennstoffzellenstapels optisch erfassbar sind. Die Indikatorelemente sind optisch erfassbar, das heißt optisch sichtbar, sodass dadurch in einfacher Weise von außen an dem Brennstoffzellenstapel die ordnungsgemäße Anordnung der Verbindungselemente an den Gegenverbindungselementen erfassbar ist. Dies kann beispielsweise mittels Augenschein während der Montage ausgeführt werden oder mithilfe einer Kamera, die mit einer entsprechenden Bildverarbeitungssoftware und einem Computer die Anordnung und Position der Indikatorelemente an vorgegebenen Indikatorpositionen erfasst.

In einer zusätzlichen Ausgestaltung sind die Verbindungselemente als Bolzen, Stifte oder Pins an den Stromleitungen ausgebildet und die Gegenverbindungselemente sind als Öffnungen oder Bohrungen an den Bipolarplatten ausgebildet oder umgekehrt sind die Verbindungselemente als Öffnungen oder Bohrungen an den Stromleitungen ausgebildet und die Gegenverbindungselemente sind als Bolzen, Stifte oder Pins an den Bipolarplatten ausgebildet. Die Verbindungselemente können dadurch besonders einfach mechanisch in die Öffnungen oder Bohrungen eingeführt werden und dadurch form- und/oder kraftschlüssig aufgrund der Geometrie der Verbindungselemente und der Gegenverbindungselemente miteinander und/oder aneinander fixiert werden.

In einer zusätzlichen Ausgestaltung ragen die Indikatorelemente aus den Bipolarplatten heraus, insbesondere ist die Länge der Verbindungselemente größer als die Länge der Gegenverbindungselemente, so dass Teilbereiche der Verbindungselemente aus den Gegenverbindungselemente herausragen und die Teilbereiche der Verbindungselemente als Indikatorelemente optisch erfassbar sind. Die Verbindungselemente bilden damit wenigstens teilweise auch die Indikatorelemente.

In einer zusätzlichen Ausgestaltung sind in den Bipolarplatten Aussparungen ausgebildet und die Indikatorelemente sind durch die Aussparungen von außerhalb des Brennstoffzellenstapels optisch erfassbar. Die Aussparung sind beispielsweise als Durchstanzungen in einer Ebene senkrecht zu der von den Brennstoffzellen aufgespannten fiktiven Ebene ausgebildet oder die Aussparungen sind Öffnungen in einer Richtung parallel zu den von den Bipolarplatten aufgespannten fiktiven Ebenen.

In einer ergänzenden Variante umfasst die Brennstoffzelleneinheit eine Überwachungseinheit als Recheneinheit zur Überwachung des wenigstens einen Parameter der Brennstoffzellen.

Zweckmäßig umfasst die Brennstoffzelleneinheit eine Datenübertragungsvorrichtung zur Übertragung von Daten hinsichtlich des wenigstens einen zu erfassenden Parameters der Brennstoffzellen von den Stromleitungen zu der Überwachungseinheit.

Erfindungsgemäßes Verfahren zur Herstellung einer Brennstoffzelleneinheit als Brennstoffzellenstapel zur elektrochemischen Erzeugung von elektrischer Energie mit den Schritten: zur Verfügung stellen einer Brennstoffzelleneinheit mit gestapelt angeordneten Brennstoffzellen, die Brennstoffzellen umfassend Protonenaustauschermembranen, Anoden, Kathoden, Gasdiffusionssichten und Bipolarplatten mit Gegenverbindungselementen, zur Verfügung stellen von Stromleitungen zur elektrischen Verbindung mit den Bipolarplatten der Brennstoffzellen und zur Überwachung wenigstens eines Parameters der Brennstoffzellen, zur Verfügung stellen von Verbindungselementen, welche elektrisch leitend mit den Stromleitungen verbunden sind, elektrisches Verbinden der Stromleitungen mit den Bipolarplatten indem die Verbindungselemente an Gegenverbindungselementen der Bipolarplatten mit Fixierungen befestigt werden und die Verbindungselemente elektrisch leitend mit den Gegenverbindungselementen an den Bipolarplatten verbunden werden, wobei während des Fixierens der Verbindungselemente an den Gegenverbindungselementen von Indikatorelementen eine Relativbewegung zwischen den Bipolarplatten und den Indikatorelementen ausgeführt wird, sodass nach der ordnungsgemäßen Fixierung der Verbindungselemente an den Gegenverbindungselementen die Indikatorelemente von außerhalb des Brennstoffzellenstapels optisch erfassbar sind. Die Indikatorelemente sind somit mechanische Bauteile, welche während des Fixierens der Verbindungselemente an den Gegenverbindungselementen eine Relativbewegung zwischen den Bipolarplatten und den Indikatorelementen ausführen.

In einer ergänzenden Variante sind vor dem Einführen der Verbindungselemente in die Gegenverbindungselemente die Indikatorelemente von außerhalb des Brennstoffzellenstapels nicht optisch erfassbar, insbesondere nicht an vorgegebenen Indikatorpositionen an den Bipolarplatten optisch erfassbar. Vor dem Einführen der Verbindungselemente in die Gegenverbindungselemente sind somit die Indikatorelemente vorzugsweise innerhalb der Bipolarplatten angeordnet und optisch nicht erfassbar, das heißt nicht sichtbar. Aufgrund der Relativbewegung zwischen den Indikatorelementen und den Bipolarplatten während des Fixierens der Fixierungselemente erfolgt eine Relativbewegung von optisch nicht erfassbaren Positionen oder Positionen außerhalb der Indikatorpositionen zu optisch erfassbaren Positionen der Indikatorelemente in den Indikatorpositionen. Vorzugsweise sind die Indikatorelemente vor der Befestigung der Verbindungselemente an den Gegenverbindungselementen außerhalb der Indikatorpositionen angeordnet, insbesondere sind die Indikatorpositionen in diesen Positionen außerhalb der Indikatorpositionen optisch nicht erfassbar oder optisch erfassbar.

In einer ergänzenden Variante sind die Indikatorelemente von außerhalb des Brennstoffzellenstapels in vorgegebenen Indikatorpositionen an den Bipolarplatten optisch erfassbar, falls die Verbindungselemente ordnungsgemäß an den Gegenverbindungselementen befestigt sind. Aufgrund der fest vorgegebenen Indikatorpositionen der Indikatorelemente kann somit zuverlässig die ordnungsgemäße Anordnung der Verbindungselemente an den Gegenverbindungselementen geprüft werden.

In einer zusätzlichen Ausgestaltung wird die Relativbewegung zwischen den Bipolarplatten und den Indikatorelementen ausgeführt aufgrund einer kinematischen und/oder mechanischen Wirkverbindung zwischen den Verbindungselementen und den Indikatorelementen. Die kinematische und/oder mechanische Wirkverbindung ist beispielsweise ein Kontakt zwischen den Indikatorelementen und den Verbindungselementen, sodass dadurch von den Verbindungselementen auf die Indikatorelemente eine Kraft, insbesondere Druckkraft, aufbringbar ist zum Bewegen der Indikatorelemente oder die Indikatorelemente sind wenigstens teilweise von den Verbindungselementen gebildet, sodass dadurch die kinematische und/oder mechanische Wirkverbindung zwischen den Verbindungselementen und den Indikatorelementen vorhanden ist.

In einer ergänzenden Ausgestaltung sind die Indikatorelemente von den Verbindungselementen oder Zusatzindikatorelementen als gesonderte Bauteile in Ergänzung zu den Verbindungselementen gebildet.

In einer zusätzlichen Ausgestaltung sind die Verbindungselemente als Bolzen, Stifte oder Pins an den Stromleitungen ausgebildet und die Gegenverbindungselemente sind als, vorzugsweise kanalförmige, Öffnungen oder Bohrungen an den Bipolarplatten ausgebildet oder umgekehrt sind die Verbindungselemente als, vorzugsweise kanalförmige, Öffnungen oder Bohrungen an den Stromleitungen ausgebildet und die Gegenverbindungselemente sind als Bolzen, Stifte oder Pins an den Bipolarplatten ausgebildet.

In einer weiteren Ausgestaltung sind die Öffnungen oder Bohrungen und die Verbindungselemente dahingehend ausgebildet, so dass nach der ordnungsgemäßen Fixierung der Verbindungselemente an den Gegenverbindungselementen die Verbindungselemente aus den Öffnungen oder Bohrungen heraus ragen und die Teilbereiche der Verbindungselemente, welche aus den Öffnungen oder Bohrungen heraus ragen und durch die Gegenverbindungselemente bewegt worden sind, die Indikatorelemente bilden und die Teilbereiche der Verbindungselemente von außerhalb des Brennstoffzellenstapels optisch erfassbar sind.

Zweckmäßig werden die Verbindungselemente mit einem Roboter an den Gegenverbindungselementen an den Bipolarplatten befestigt mittels einer Relativbewegung zwischen den Verbindungselementen und Gegenverbindungselementen.

In einer weiteren Ausführungsform werden von einer Kamera die gestapelten Bipolarplatten und/oder die Indikatorelemente optisch erfasst, die Daten der Kamera werden von einem Computer mit einer Bildverarbeitungssoftware ausgewertet und in Abhängigkeit von der mittels der Bildverarbeitungssoftware ermittelten Daten zu den Positionen der Bipolarplatten und/oder Indikatorelemente, insbesondere zu Indikatorpositionen der Indikatorelemente, wird die ordnungsgemäßen Anordnung der Verbindungselemente in den Gegenverbindungselementen überwacht. In vorteilhafter Weise kann somit mit der Kamera und dem Computer sowie der Bildverarbeitungssoftware die ordnungsgemäße Anordnung der Indikatorelemente an den Indikatorpositionen geprüft werden und somit automatisiert und selbstständig die korrekte Anordnung der Verbindungselemente an den Gegenverbindungselementen geprüft werden.

In einer zusätzlichen Ausgestaltung sind die Verbindungselemente und die Gegenverbindungselemente mit einer komplementären Geometrie an Kontaktflächen zwischen den Verbindungselementen und Gegenverbindungselementen ausgebildet.

In einer weiteren Ausgestaltung bilden die Öffnungen oder Bohrungen als die Gegenverbindungselemente oder Verbindungselemente eine Lagerung, insbesondere Gleitlagerung und/oder Wälzlagerung, für die beweglichen Indikatorelemente.

In einer ergänzenden Variante sind die Indikatorelemente vor der Ausbildung der Fixierungen der Verbindungselemente an den Gegenverbindungselemente an Anfangspositionen angeordnet und nach der ordnungsgemäßen Fixierung der Verbindungselemente an den Gegenverbindungselementen sind die Indikatorelemente an den Indikatorpositionen angeordnet und vorzugsweise sind die Indikatorelemente in den Anfangspositionen optisch erfassbar oder nicht optisch erfassbar.

In einer weiteren Ausgestaltung sind die Fixierungen wenigstens teilweise, insbesondere vollständig, von den Verbindungselementen und den Gegenverbindungselementen gebildet, vorzugsweise ist je eine Fixierung von je einem Verbindungselement und je einem Gegenverbindungselement gebildet.

In einer zusätzlichen Ausgestaltung sind die Verbindungselemente aus einem elektrisch leitfähigen Material, beispielsweise Metall, insbesondere Kupfer, Messing und/oder Edelstahl, und/oder aus einem elektrisch leitfähigen Kunststoff und/oder aus einem elektrisch leitfähigen keramischen Werkstoff ausgebildet.

In einer ergänzenden Variante sind die Indikatorelemente und/oder die Verbindungselemente biegbar und/oder aus einem biegbaren Material ausgebildet. Bei biegbaren Indikatorelementen und/oder Verbindungselementen können somit die Öffnung und/oder Bohrungen gekrümmt ausgebildet werden, sodass dadurch während des Einführens des Verbindungselements in das Gegenverbindungselement dadurch eine Biegung des Verbindungselements ausführbar ist und/oder ausgeführt wird. Dies gilt analog auch für die Indikatorelemente, sodass während der Relativbewegung zwischen den Bipolarplatten und den Indikatorelementen die Indikatorelemente gebogen werden und/oder biegbar sind.

In einer zusätzlichen Ausgestaltung sind die Verbindungselemente an den Gegenverbindungselementen mit Fixierungen befestigt, indem die Fixierungselemente innerhalb der Gegenverbindungselemente angeordnet sind, insbesondere die Verbindungselemente form- und/oder kraftschlüssig an den Gegenverbindungselementen befestigt, vorzugsweise eingeklemmt, sind.

In einer zusätzlichen Ausgestaltung erfolgt das Fixieren der Verbindungselemente an den Gegenverbindungselementen dahingehend, dass die Verbindungselemente in die Gegenverbindungselemente eingeführt werden, sodass dadurch eine form- und/oder kraftschlüssige Fixierung der Verbindungselemente an den Gegenverbindungselementen hergestellt wird.

In einer weiteren Variante sind die Verbindungselemente an den Gegenverbindungselementen formschlüssig und/oder kraftschlüssig und/oder stoffschlüssig fixiert.

In einer ergänzenden Ausführungsform wird das elektrische Verbinden der Stromleitungen mit den Bipolarplatten ausgeführt indem die Verbindungselemente an Gegenverbindungselementen der Bipolarplatten formschlüssig und/oder kraftschlüssig und/oder stoffschlüssig fixiert werden

In einer weiteren Ausgestaltung sind die stoffschlüssigen Fixierungen mittels Laserschweißen und/oder Ultraschallweißen hergestellt.

Zweckmäßig sind die Bipolarplatten, insbesondere wenigstens 90% oder 99% der Bipolarplatten oder sämtliche Bipolarplatten, mittels je einer bzw. einem, insbesondere nur je einer bzw. nur je einem, Verbindungselement mit je einer, insbesondere nur je einer, Stromleitung elektrisch verbunden.

Vorzugsweise bilden die Stromleitungen zusätzlich die Verbindungselemente. Die Stromleitungen können auch als starre Stäbe ausgebildet sein, so dass Endbereiche der Stromleitungen zusätzlich die Verbindungselemente bilden.

In einer ergänzenden Variante umfasst die Brennstoffzelleneinheit eine Überwachungseinheit als Recheneinheit zur Überwachung des wenigstens einen Parameter der Brennstoffzellen. Als Parameter der Brennstoffzellen ist vorzugsweise die Spannung der Brennstoffzellen überwachbar, so dass die Überwachungseinheit ein CVM-System (Cell Voltage Monitoring-System) bildet.

In einer zusätzlichen Ausführungsform umfasst die Brennstoffzelleneinheit eine Datenübertragungsvorrichtung zur Übertragung von Daten hinsichtlich des wenigstens einen zu erfassenden Parameters der Brennstoffzellen von den Stromleitungen zu der Überwachungseinheit.

Zweckmäßig sind die Stromleitungen mit Zusatzverbindungselementen mit der Datenübertragungsvorrichtung elektrisch und mechanisch verbunden.

In einer zusätzlichen Variante ist die Brennstoffzelleneinheit mit einem in dieser Schutzrechtsanmeldung beschriebenen Verfahren hergestellt.

Vorzugsweise werden die stoffschlüssigen Fixierungen mittels Schweißen, insbesondere Laserschweißen und/oder Ultraschallweißen, hergestellt.

In einer ergänzenden Ausgestaltung werden die Fixierungen der Verbindungselemente an den Gegenverbindungselementen hergestellt indem eine Prozesseinheit zur Herstellung der Fixierungen, insbesondere formschlüssige und/oder kraftschlüssige und/oder stoffschlüssige Fixierungen, von einem Roboter im Raum bewegt wird. Die Prozesseinheit, beispielsweise eine Zange oder ein Greifer oder ein Laser oder ein Ultraschallwandler mit Sonotrode, wird von dem Roboter in eine entsprechende Prozessposition an der Bipolarplatte gebracht und anschließend wird die Fixierung hergestellt.

In einer weiteren Ausgestaltung wird je ein, insbesondere nur je ein Verbindungselement mit dem Roboter an je einem, insbesondere nur je einem, Gegenverbindungselement der Bipolarplatte fixiert.

Vorzugsweise sind in einem Computer Positionsdaten zur geometrischen Anordnung der Bipolarplatten und/oder Gegenverbindungselemente der Brennstoffzelleneinheit und der relativen Position des Roboters zu den Bipolarplatten und/oder Gegenverbindungselementen der Brennstoffzelleneinheit gespeichert und in Abhängigkeit von den Positionsdaten wird die Bewegung des Roboters, insbesondere der von dem Roboter bewegten Prozesseinheit und Verbindungselementen, im Raum gesteuert, vorzugsweise in einer Anfangsphase der Bewegung der Prozesseinheit zu je einer Bipolarplatte.

In einer ergänzenden Ausführungsform ist der wenigstens eine mit den Stromleitungen überwachte Parameter der Brennstoffzellen die Spannungsdifferenz zwischen wenigstens zwei Bipolarplatten, insbesondere die Spannungsdifferenzen zwischen je wenigstens zwei unmittelbar benachbarten Bipolarplatten.

Vorzugsweise umfasst die Brennstoffzelleneinheit wenigstens einen Generator zur Erzeugung eines Überwachungssignales, insbesondere Wechselstrom, und mit der wenigstens einen Datenübertragungsvorrichtung und den Stromleitungen ist das Überwachungssignal von dem wenigstens einen Generator zu den Bipolarplatten übertragbar zur Beaufschlagung der Bipolarplatten mit dem Überwachungssignal, insbesondere zur Erfassung der Impedanz als einen Parameter der Brennstoffzelle.

In einer weiteren Variante ist die wenigstens eine Datenübertragungsvorrichtung als wenigstens eine Stromleitung und/oder als wenigstens eine Stromabnehmerleiste mit Stromleitungen und/oder als wenigstens eine CAN-Schnittstelle und/oder wenigstens eine LIN-Schnittstelle und/oder wenigstens ein Funkübertragungsmittel ausgebildet. Das Funkübertragungsmittel überträgt die Daten mittels Funk, beispielsweise mit WLAN oder Bluetooth.

Zweckmäßig bilden die Verbindungselemente, insbesondere ausschließlich, die Stromleitungen. Bei einer unmittelbaren Anordnung beispielsweise eines Funkübertragungsmittels an den Verbindungselementen fungieren somit die Verbindungselemente, insbesondere ausschließlich, auch als Stromleitungen.

In einer ergänzenden Ausgestaltung ist der wenigstens eine Parameter die elektrische Spannung und/oder die Impedanz wenigstens einer überwachten Brennstoffzelle.

In einer weiteren Variante umfasst die Brennstoffzelleneinheit wenigstens eine Verbindungsvorrichtung, insbesondere mehrere Verbindungsvorrichtungen, und Spannelemente.

Zweckmäßig sind Komponenten für Brennstoffzellen Protonenaustauschermembranen, Anoden, Kathoden, Gasdiffusionsschichten und Bipolarplatten.

In einer weiteren Ausgestaltung umfassen die Brennstoffzellen jeweils eine Protonenaustauschermembran, eine Anode, eine Kathode, wenigstens eine Gasdiffusionsschicht und wenigstens eine Bipolarplatte.

In einer weiteren Ausführungsform ist die Verbindungsvorrichtung als ein Bolzen ausgebildet und/oder ist stabförmig.

Zweckmäßig sind die Spannelemente als Spannplatten ausgebildet.

Erfindungsgemäßes Brennstoffzellensystem, insbesondere für ein Kraftfahrzeug, umfassend eine Brennstoffzelleneinheit als Brennstoffzellenstapel mit Brennstoffzellen, einen Druckgasspeicher zur Speicherung von gasförmigem Brennstoff, eine Gasfördervorrichtung zur Förderung eines gasförmigen Oxidationsmittels zu den Kathoden der Brennstoffzellen, wobei die Brennstoffzelleneinheit als eine in dieser Schutzrechtsanmeldung beschriebene Brennstoffzelleneinheit ausgebildet ist.

In einer weiteren Variante ist die Gasfördervorrichtung als ein Gebläse oder ein Kompressor ausgebildet.

Insbesondere umfasst die Brennstoffzelleneinheit wenigstens 3, 4, 5 oder 6 Verbindungsvorrichtungen.

In einer weiteren Ausgestaltung sind die Spannelemente plattenförmig und/oder scheibenförmig und/oder eben ausgebildet und/oder als ein Gitter ausgebildet.

Vorzugsweise ist der Brennstoff Wasserstoff, wasserstoffreiches Gas, Reformatgas oder Erdgas.

Zweckmäßig sind die Brennstoffzellen im Wesentlichen eben und/oder scheibenförmig ausgebildet.

In einer ergänzenden Variante ist das Oxidationsmittel Luft mit Sauerstoff oder reiner Sauerstoff.

Vorzugsweise ist die Brennstoffzelleneinheit eine PEM-Brennstoffzelleneinheit mit PEM-Brennstoffzellen.

Die Erfindung umfasst ferner ein Computerprogramm mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Bestandteil der Erfindung ist außerdem ein Computerprogrammprodukt mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: eine stark vereinfachte Explosionsdarstellung eines Brennstoffzellensystems mit Komponenten einer Brennstoffzelle,
- Fig. 2: eine perspektivische Ansicht eines Teils einer Brennstoffzelle,
- Fig. 3: einen Längsschnitt durch eine Brennstoffzelle,
- Fig. 4: eine perspektivische Ansicht einer Brennstoffzelleneinheit als Brennstoffzellenstapel, d. h. einen Brennstoffzellenstack,
- Fig. 5: einen Schnitt durch die Brennstoffzelleneinheit gemäß Fig. 4,
- Fig. 6: einen Schnitt durch die Brennstoffzelleneinheit mit Darstellung von Stromleitungen, einer Datenübertragungsvorrichtung und einer Überwachungseinheit zur Überwachung wenigstens eines Parameters der Brennstoffzellen,
- Fig. 7: eine stark vereinfachte Darstellung eines Roboters,
- Fig. 8: eine Teildraufsicht einer Bipolarplatte und eines Steckers mit einem Verbindungselement vor einer ordnungsgemäßen Anordnung des Verbindungselementes an einem Gegenverbindungselement der Bipolarplatte in einem ersten Ausführungsbeispiel,
- Fig. 9: eine Teildraufsicht der Bipolarplatte und des Steckers mit dem Verbindungselement nach der ordnungsgemäßen Anordnung des Verbindungselementes an dem Gegenverbindungselement der Bipolarplatte in dem ersten Ausführungsbeispiel,
- Fig. 10: eine Teildraufsicht der Bipolarplatte und des Steckers mit dem Verbindungselement vor der ordnungsgemäßen Anordnung des Verbindungselementes an dem Gegenverbindungselement der Bipolarplatte in einem zweiten Ausführungsbeispiel,
- Fig. 11: eine Teildraufsicht der Bipolarplatte und des Steckers mit dem Verbindungselement nach der ordnungsgemäßen Anordnung des Verbindungselementes an dem Gegenverbindungselement der Bipolarplatte in dem zweiten Ausführungsbeispiel,
- Fig. 12: eine Teildraufsicht der Bipolarplatte und des Steckers mit dem Verbindungselement vor der ordnungsgemäßen Anordnung des Verbindungselementes an dem Gegenverbindungselement der Bipolarplatte in einem dritten Ausführungsbeispiel,
- Fig. 13: eine Teildraufsicht der Bipolarplatte und des Steckers mit dem Verbindungselement nach der ordnungsgemäßen Anordnung des Verbindungselementes an dem Gegenverbindungselement der Bipolarplatte in dem dritten Ausführungsbeispiel,
- Fig. 14: eine Teildraufsicht der Bipolarplatte und des Steckers mit dem Verbindungselement vor der ordnungsgemäßen Anordnung des Verbindungselementes an dem Gegenverbindungselement der Bipolarplatte in einem vierten Ausführungsbeispiel und
- Fig. 15: eine Teildraufsicht der Bipolarplatte und des Steckers mit dem Verbindungselement nach der ordnungsgemäßen Anordnung des Verbindungselementes an dem Gegenverbindungselement der Bipolarplatte in dem vierten Ausführungsbeispiel.

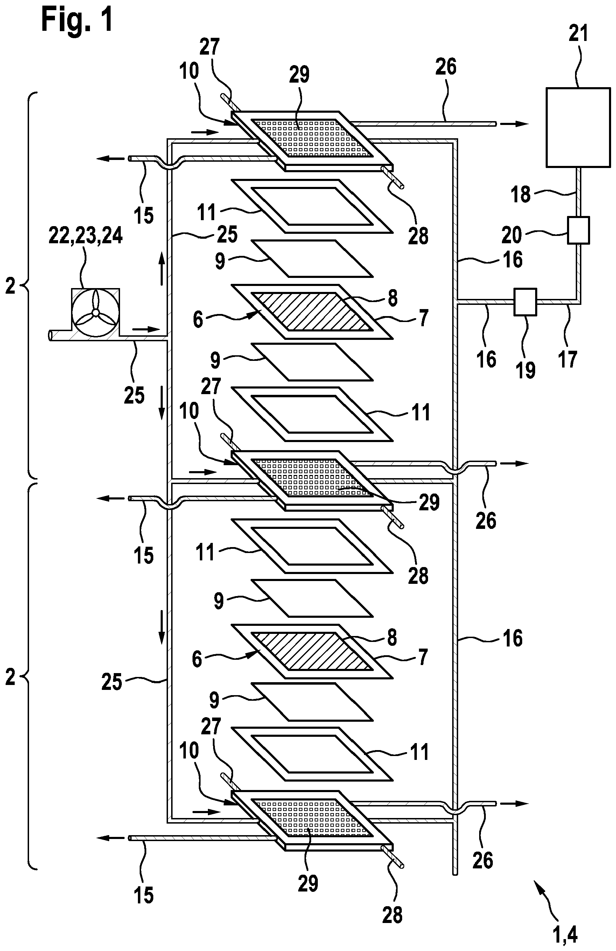

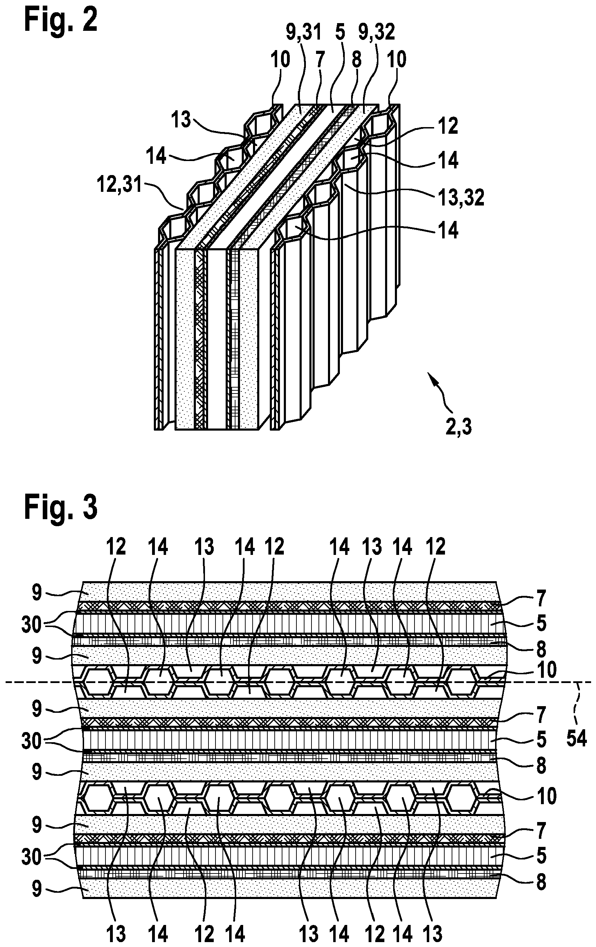

In den Fig. 1 bis 3 ist der grundlegende Aufbau einer Brennstoffzelle 2 als einer PEM-Brennstoffzelle 3 (Polymerelektrolyt-Brennstoffzelle 3) dargestellt. Das Prinzip von Brennstoffzellen 2 besteht darin, dass mittels einer elektrochemischen Reaktion elektrische Energie bzw. elektrischer Strom erzeugt wird. An einer Anode 7 wird Wasserstoff H₂ als gasförmiger Brennstoff geleitet und die Anode 7 bildet den Minuspol. An einer Kathode 8 wird ein gasförmiges Oxidationsmittel, nämlich Luft mit Sauerstoff, geleitet, d. h. der Sauerstoff in der Luft stellt das notwendige gasförmige Oxidationsmittel zur Verfügung. An der Kathode 8 findet eine Reduktion (Elektronenaufnahme) statt. Die Oxidation als Elektronenabgabe wird an der Anode 7 ausgeführt.

Die Redoxgleichungen der elektrochemischen Vorgänge lauten:

Kathode: O₂ + 4 H⁺ + 4 e⁻ --» 2 H₂O

Anode: 2 H₂ --» 4 H⁺ + 4 e⁻

Summenreaktionsgleichung von Kathode und Anode: 2 H₂ + O₂ --» 2 H₂O

Die Differenz der Normalpotentiale der Elektrodenpaare unter Standardbedingungen als reversible Brennstoffzellenspannung oder Leerlaufspannung der unbelasteten Brennstoffzelle 2 beträgt 1,23 V. Diese theoretische Spannung von 1,23 V wird in der Praxis nicht erreicht. Im Ruhezustand und bei kleinen Strömen können Spannungen über 1,0 V erreicht werden und im Betrieb mit größeren Strömen werden Spannungen zwischen 0,5 V und 1,0 V erreicht. Die Reihenschaltung von mehreren Brennstoffzellen 2, insbesondere eine Brennstoffzelleneinheit 1 als Brennstoffzellenstapel 1 von mehreren fluchtend gestapelt angeordneten Brennstoffzellen 2, weist eine höhere Spannung auf, welche der Zahl der Brennstoffzellen 2 multipliziert mit der Einzelspannung je einer Brennstoffzelle 2 entspricht.

Die Brennstoffzelle 2 umfasst außerdem eine Protonenaustauschermembran 5 (Proton Exchange Membrane, PEM), welche zwischen der Anode 7 und der Kathode 8 angeordnet ist. Die Anode 7 und Kathode 8 sind schichtförmig bzw. scheibenförmig ausgebildet. Die PEM 5 fungiert als Elektrolyt, Katalysatorträger und Separator für die Reaktionsgase. Die PEM 5 fungiert außerdem als elektrischer Isolator und verhindert einen elektrischen Kurzschluss zwischen der Anode 7 und Kathode 8. Im Allgemeinen werden 12 µm bis 150 µm dicke, protonenleitende Folien aus perfluorierten und sulfonierten Polymeren eingesetzt. Die PEM 5 leitet die Protonen H⁺ und sperrt andere Ionen als Protonen H⁺ im Wesentlichen, so dass aufgrund der Durchlässigkeit der PEM 5 für die Protonen H⁺ der Ladungstransport erfolgen kann. Die PEM 5 ist für die Reaktionsgase Sauerstoff O₂ und Wasserstoff H₂ im Wesentlichen undurchlässig, d. h. sperrt die Strömung von Sauerstoff O₂ und Wasserstoff H₂ zwischen einem Gasraum 31 an der Anode 7 mit Brennstoff Wasserstoff H₂ und dem Gasraum 32 an der Kathode 8 mit Luft bzw. Sauerstoff O₂ als Oxidationsmittel. Die Protonenleitfähigkeit der PEM 5 vergrößert sich mit steigender Temperatur und steigenden Wassergehalt.

Auf den beiden Seiten der PEM 5, jeweils zugewandt zu den Gasräumen 31, 32, liegen die Elektroden 7, 8 als die Anode 7 und Kathode 8 auf. Eine Einheit aus der PEM 5 und den Elektroden 7, 8 wird als Membranelektrodenanordnung 6 (Membran Electrode Array, MEA) bezeichnet. Die Elektroden 7, 8 sind mit der PEM 5 verpresst. Die Elektroden 7, 8 sind platinhaltige Kohlenstoffpartikel, die an PTFE (Polytetrafluorethylen), FEP (Fluoriertes Ethylen-Propylen-Copolymer), PFA (Perfluoralkoxy), PVDF (Polyvinylidenfluorid) und/oder PVA (Polyvinylalkohol) gebunden sind und in mikroporösen Kohlefaser-, Glasfaser- oder Kunststoffmatten heißverpresst sind. An den Elektroden 7, 8 sind auf der Seite zu den Gasräumen 31, 32 hin normalerweise jeweils eine Katalysatorschichten 30 aufgebracht. Die Katalysatorschicht 30 an dem Gasraum 31 mit Brennstoff an der Anode 7 umfasst nanodisperses Platin-Ruthenium auf grafitierten Rußpartikeln, die an einem Bindemittel gebunden sind. Die Katalysatorschicht 30 an dem Gasraum 32 mit Oxidationsmittel an der Kathode 8 umfasst analog nanodisperses Platin. Als Bindemittel werden beispielsweise Nation^{®}, eine PTFE-Emulsion oder Polyvinylalkohol eingesetzt.

Auf der Anode 7 und der Kathode 8 liegt eine Gasdiffusionsschicht 9 (Gas Diffusion Layer, GDL) auf. Die Gasdiffusionsschicht 9 an der Anode 7 verteilt den Brennstoff aus Kanälen 12 für Brennstoff gleichmäßig auf die Katalysatorschicht 30 an der Anode 7. Die Gasdiffusionsschicht 9 an der Kathode 8 verteilt das Oxidationsmittel aus Kanälen 13 für Oxidationsmittel gleichmäßig auf die Katalysatorschicht 30 an der Kathode 8. Die GDL 9 zieht außerdem Reaktionswasser in umgekehrter Richtung zur Strömungsrichtung der Reaktionsgase ab, d. h. in einer Richtung je von der Katalysatorschicht 30 zu den Kanälen 12, 13. Ferner hält die GDL 9 die PEM 5 feucht und leitet den Strom. Die GDL 9 ist beispielsweise aus einem hydrophobierten Kohlepapier und einer gebundenen Kohlepulverschicht aufgebaut. Die Brennstoffzellen 2 sind schichtförmige und scheibenförmig ausgebildet und dies gilt auch für die Komponenten Protonenaustauschermembranen 5, Anoden 7, Kathoden 8, Gasdiffusionssichten 9 und Bipolarplatten 10. Die Brennstoffzellen 2 und die Komponenten der Brennstoffzellen 2 spannen fiktive Ebenen 54, die parallel zueinander ausgerichtet sind.

Auf der GDL 9 liegt eine Bipolarplatte 10 auf. Die elektrisch leitfähige Bipolarplatte 10 dient als Stromkollektor, zur Wasserableitung und zur Leitung der Reaktionsgase durch eine Kanalstruktur 29 und/oder ein Flussfeld 29 und zur Ableitung der Abwärme, welche insbesondere bei der exothermischen elektrochemischen Reaktion an der Kathode 8 auftritt. Zum Ableiten der Abwärme sind in die Bipolarplatte 10 Kanäle 14 zur Durchleitung eines flüssigen oder gasförmigen Kühlmittels eingearbeitet. Die Kanalstruktur 29 an dem Gasraum 31 für Brennstoff ist von Kanälen 12 gebildet. Die Kanalstruktur 29 an dem Gasraum 32 für Oxidationsmittel ist von Kanälen 13 gebildet. Als Material für die Bipolarplatten 10 werden beispielsweise Metall, leitfähige Kunststoffe und Kompositwerkstoffe oder Grafit eingesetzt.

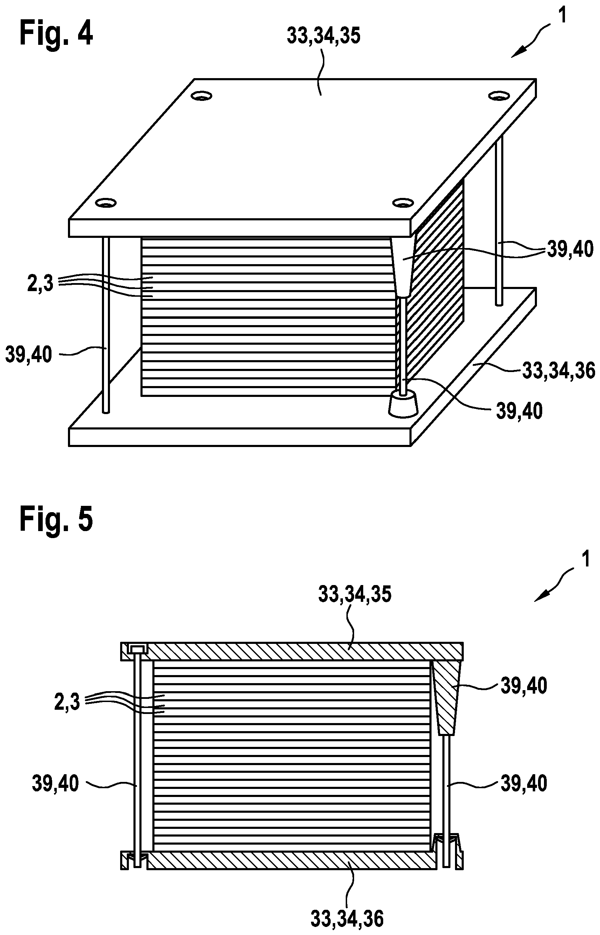

In einer Brennstoffzelleneinheit 1 und/oder einem Brennstoffzellenstapel 1 und/oder einem Brennstoffzellenstack 1 sind mehrere Brennstoffzellen 2 übereinander angeordnet (Fig. 4). In Fig. 1 ist eine Explosionsdarstellung von zwei übereinander angeordneten Brennstoffzellen 2 abgebildet. Eine Dichtung 11 dichtet die Gasräume 31, 32 fluiddicht ab. In einem Druckgasspeicher 21 (Fig. 1) ist Wasserstoff H₂ als Brennstoff mit einem Druck von beispielsweise 350 bar bis 700 bar gespeichert. Aus dem Druckgasspeicher 21 wird der Brennstoff durch eine Hochdruckleitung 18 zu einem Druckminderer 20 geleitet zur Reduzierung des Druckes des Brennstoffes in einer Mitteldruckleitung 17 von ungefähr 10 bar bis 20 bar. Aus der Mitteldruckleitung 17 wird der Brennstoff zu einem Injektor 19 geleitet. An dem Injektor 19 wird der Druck des Brennstoffes auf einen Einblasdruck zwischen 1 bar und 3 bar reduziert. Von dem Injektor 19 wird der Brennstoff einer Zufuhrleitung 16 für Brennstoff (Fig. 1) zugeführt und von der Zufuhrleitung 16 den Kanälen 12 für Brennstoff, welche die Kanalstruktur 29 für Brennstoff bilden. Der Brennstoff durchströmt dadurch den Gasraum 31 für den Brennstoff. Der Gasraum 31 für den Brennstoff ist von den Kanälen 12 und der GDL 9 an der Anode 7 gebildet. Nach dem Durchströmen der Kanäle 12 wird der nicht in der Redoxreaktion an der Anode 7 verbrauchte Brennstoff und gegebenenfalls Wasser aus einer kontrollieren Befeuchtung der Anode 7 durch eine Abfuhrleitung 15 aus den Brennstoffzellen 2 abgeleitet.

Eine Gasfördereinrichtung 22, beispielsweise als ein Gebläse 23 oder ein Kompressor 24 ausgebildet, fördert Luft aus der Umgebung als Oxidationsmittel in eine Zufuhrleitung 25 für Oxidationsmittel. Aus der Zufuhrleitung 25 wird die Luft den Kanälen 13 für Oxidationsmittel, welche eine Kanalstruktur 29 an den Bipolarplatten 10 für Oxidationsmittel bilden, zugeführt, so dass das Oxidationsmittel den Gasraum 32 für das Oxidationsmittel durchströmt. Der Gasraum 32 für das Oxidationsmittel ist von den Kanälen 13 und der GDL 9 an der Kathode 8 gebildet. Nach dem Durchströmen der Kanäle 13 bzw. des Gasraumes 32 für das Oxidationsmittel 32 wird das nicht an der Kathode 8 verbrauchte Oxidationsmittel und das an der Kathode 8 aufgrund der elektrochemischen Redoxreaktion entstehenden Reaktionswasser durch eine Abfuhrleitung 26 aus den Brennstoffzellen 2 abgeleitet. Eine Zufuhrleitung 27 dient zur Zuführung von Kühlmittel in die Kanäle 14 für Kühlmittel und eine Abfuhrleitung 28 dient zur Ableitung des durch die Kanäle 14 geleiteten Kühlmittels. Die Zu- und Abfuhrleitungen 15, 16, 25, 26, 27, 28 sind in Fig. 1 aus Vereinfachungsgründen als gesonderte Leitungen dargestellt und können konstruktiv tatsächlich unterschiedlich ausgebildet sein, beispielsweise als Bohrungen in einem Rahmen (nicht dargestellt) oder als fluchtende Bohrungen am Endbereich (nicht dargestellt) aufeinander liegender Bipolarplatten 10. Der Brennstoffzellenstack 1 zusammen mit dem Druckgasspeicher 21 und der Gasfördereinrichtung 22 bildet ein Brennstoffzellensystem 4.

In der Brennstoffzelleneinheit 1 sind die Brennstoffzellen 2 zwischen zwei Spannelementen 33 als Spannplatten 34 angeordnet. Eine obere Spannplatte 35 liegt auf der obersten Brennstoffzelle 2 auf und eine untere Spannplatte 36 liegt auf der untersten Brennstoffzelle 2 auf. Die Brennstoffzelleneinheit 1 umfasst ungefähr 300 bis 400 Brennstoffzellen 2, die aus zeichnerischen Gründen nicht alle in Fig. 4 dargestellt sind. Die Spannelemente 33 bringen auf die Brennstoffzellen 2 eine Druckkraft auf, d. h. die obere Spannplatte 35 liegt mit einer Druckkraft auf der obersten Brennstoffzelle 2 auf und die untere Spannplatte 36 liegt mit einer Druckkraft auf der untersten Brennstoffzelle 2 auf. Damit ist der Brennstoffzellenstapel 2 verspannt, um die Dichtheit für den Brennstoff, das Oxidationsmittel und das Kühlmittel, insbesondere aufgrund der elastischen Dichtung 11, zu gewährleisten und außerdem den elektrischen Kontaktwiderstand innerhalb des Brennstoffzellenstapels 1 möglichst klein zu halten. Zur Verspannung der Brennstoffzellen 2 mit den Spannelementen 33 sind an der Brennstoffzelleneinheit 1 vier Verbindungsvorrichtungen 39 als Bolzen 40 ausgebildet, welche auf Zug beansprucht sind. Die vier Bolzen 40 sind mit den Spanplatten 34 fest verbunden.

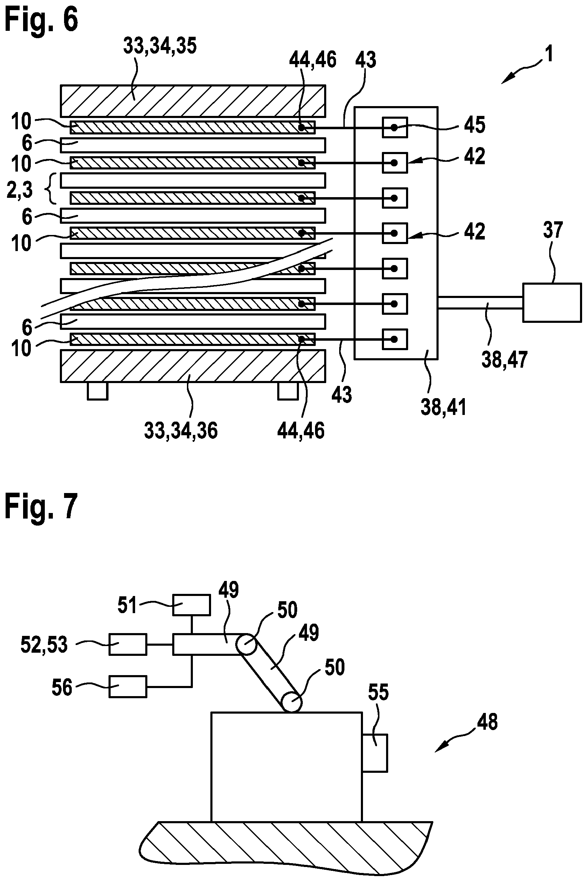

Wenigstens ein Parameter der Brennstoffzelleneinheit 1 wird von einer Überwachungseinheit 37 überwacht (Fig. 6). Als wesentlicher Parameter wird die Spannung der Brennstoffzellen 2 überwacht, d. h. die Differenz der Spannung zwischen zwei Bipolarplatten 10. Die Überwachungseinheit 37 (FCCU, Fuel Cell Control Unit) bildet damit insbesondere ein CVM-System (Cell Voltage Monitoring-System). Sämtliche Bipolarplatten 10 sind elektrisch und mechanisch mit Stromleitungen 43 verbunden und die Stromleitungen 43 sind mit einer Datenübertragungsvorrichtung 38 mit der Überwachungseinheit 37 elektrisch verbunden. Jede Stromleitung 43 ist somit zur Erfassung des wenigstens eines Parameters elektrisch mit der Überwachungseinheit 37 verbunden. Die Datenübertragungsvorrichtung 38 ist von einer Stromabnehmerleiste 41 mit Kontaktflächen 42 und einem Kabelbaum 47 gebildet. Die Stromleitungen 43 sind mit Verbindungselementen 44 elektrisch mit den Bipolarplatten 10 verbunden. Die Stromabnehmerleiste 41 ist mit dem Kabelbaum 47 elektrisch mit der Überwachungseinheit 37 verbunden. Jede Bipolarplatte 10 ist mittels je einer form- und/oder kraftschlüssigen Fixierung 46 eines Verbindungselementes 44 an einem Gegenverbindungselement 57 in der Bipolarplatte 10 form- und/oder kraftschlüssig mit einem Verbindungselement 44 verbunden, so dass je eine Bipolarplatte 10 mit je einer Stromleitung 43 elektrisch leitend verbunden ist. Die Stromleitungen 43 sind elektrisch leitend mit den Verbindungselementen 44 verbunden. Aufgrund der form- und/oder kraftschlüssigen Fixierung 46 der Verbindungselemente 44 an den Gegenverbindungselementen 57 sind die Verbindungselemente 44 mechanisch und elektrisch leitend mit den Gegenverbindungselementen 57 und Bipolarplatten 10 verbunden. Die Stromleitungen 43 sind mit Zusatzverbindungselementen 45 mechanisch und elektrisch mit den Kontaktflächen 42 der Stromabnehmerleiste 41 verbunden. Die Anzahl der Kontaktflächen 42 entspricht der Anzahl der Stromleitungen 43 und jede Stromleitung 43 ist mit je einer Kontaktfläche 42 verbunden. Die Zusatzverbindungselemente 45 sind als stoffschlüssige Verbindungen, beispielsweise Lötverbindungen, ausgebildet. Die Bipolarplatten 10, die Stromleitungen 43, die Verbindungselemente 44, die Gegenverbindungselemente 57 und die Kontaktflächen 42 sind aus einem elektrisch leitfähigem Material, insbesondere Metall, ausgebildet.

Die Anzahl der Bipolarplatten 10 entspricht somit der Anzahl der Stromleitungen 43, der Anzahl der Verbindungselemente 44, der Anzahl der Gegenverbindungselemente 57 und der Anzahl der Zusatzverbindungselemente 45. Als Parameter wird beispielsweise die elektrische Spannung zwischen zwei Bipolarplatten 10 erfasst und bei einer Abweichung der erfassten Spannung von einem vorgegebenen Sollwertbereich wird von der Überwachungseinheit 37 eine Fehlermeldung ausgegeben.

Bei der Herstellung der Brennstoffzelleneinheit 1 werden Brennstoffzellen 2 gestapelt zu der Brennstoffzelleneinheit 1 als Brennstoffzellenstapel 1 angeordnet, d. h. die Brennstoffzelleneinheit 1 mit den gestapelt angeordneten Brennstoffzellen 2 zur Verfügung gestellt. Ein Roboter 48 umfasst Roboterarme 49 und Robotergelenke 50. Als Roboter 48 können auch einfache gebaute Roboter 48 eingesetzt werden, welche im Wesentlichen nur geradlinige Bewegungen parallel und senkrecht zu den fiktiven Ebenen 54 ausführen können, so dass die Kosten für Herstellung noch weiter reduziert werden können. An einem Endbereich eines letzten Roboterarmes 49 sind eine Prozesseinheit 52 als ein Laser 53, eine Kamera 51 und eine Greifzange 56 befestigt. Die Greifzange 56 ist mit einem motorisch bewegbaren Gelenk (nicht dargestellt) an dem letzten Roboterarm 49 befestigt. Ein Computer 55 mit einem Prozessor und einem Datenspeicher steuert der Roboter 48. In dem Datenspeicher sind Positionsdaten zur vorgesehenen geometrischen Anordnung der Bipolarplatten 10 und/oder Indikatorelementen 59 und/oder Gegenverbindungselementen 57 und/oder zur relativen Position des Roboters 48 zu der Brennstoffzelleneinheit 1 gespeichert. Die Kamera 51 erfasst optisch Bilder der Bipolarplatten 10 und der Indikatorelemente 59 und mit einer Bildverarbeitungssoftware in dem Computer 55 wird die tatsächliche relative Position der Bipolarplatten 10 zu dem Roboter 48 erfasst. Die Steuerung der Bewegung des Roboters 48 erfolgt somit in Abhängigkeit von den in dem Datenspeicher gespeicherten vorgesehenen Positionsdaten und/oder den von der Bildverarbeitungssoftware bestimmten Daten zur tatsächlichen Position der Bipolarplatten 10 relativ zu dem Roboter 48. Die gespeicherten Positionsdaten können somit mit den von der Bildverarbeitungssoftware bestimmten Daten zur tatsächlichen Position der Bipolarplatten 10 relativ zu dem Roboter 48 korrigiert werden, so dass in vorteilhafter Weise Abweichungen in der geometrischen Anordnung der Bipolarplatten 10 aufgrund von Fertigungsungenauigkeiten keine Auswirkungen auf die Herstellung haben.

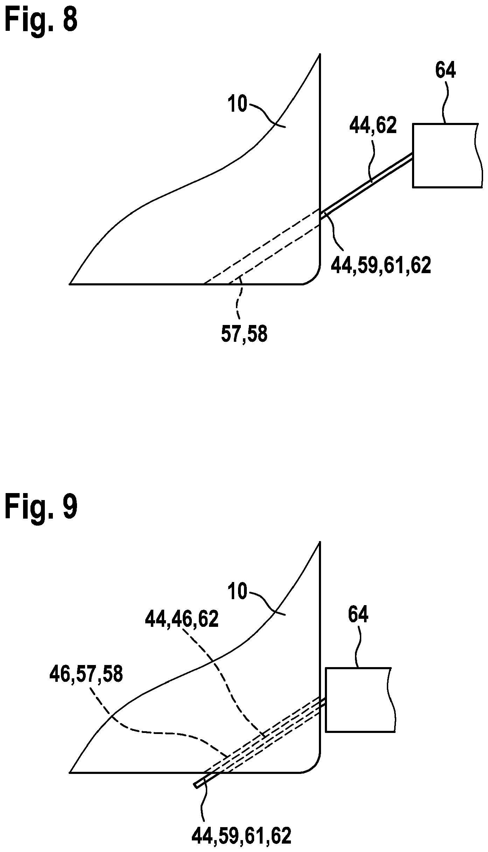

In jeder Bipolarplatte 10 ist je ein Gegenverbindungselement 57 als eine kanalförmige Öffnung 58 oder als eine kanalförmige Bohrung 58 ausgebildet. Die Verbindungselemente 44, welche elektrisch leitend und mechanisch mit den Stromleitungen 43 verbunden sind, sind als Pins 62, Stifte 62 oder als Bolzen 62 ausgebildet (Fig. 8 und 9). In dem in Fig. 8 und 9 dargestellten ersten Ausführungsbeispiel sind die Verbindungselemente 44 an einem Stecker 64 befestigt. Dabei sind an einem Stecker 64 normalerweise mehrere Verbindungselemente 44 angeordnet und fixiert. Von den Steckern 64 führen dann die Stromleitungen 43 zu der Stromabnehmerleiste 41 und zu der Überwachungseinheit 37. Die Stecker 64 mit mehreren Pins 62 (nicht dargestellt) sind in Fig. 6 nicht dargestellt. Für die Fixierung der Verbindungselemente 44 innerhalb der Gegenverbindungselemente 57 werden die Pins 62 als die Verbindungselemente 44 in die kanalförmigen Öffnungen 58 als den Gegenverbindungselementen 57 eingeführt. Dabei ist der Durchmesser der Pins 62 geringfügig größer als der Durchmesser der kanalförmigen Öffnungen 58, sodass dadurch während des Einführens der Pins 62 in die kanalförmigen Öffnungen 58 eine form- und kraftschlüssige Fixierung 46 der Pins 62 an den kanalförmigen Öffnungen 58 hergestellt wird. Die Bewegung der Stecker 64 mit den Pins 62 zum Einführen der Pins 62 in die kanalförmigen Öffnungen 58 der Bipolarplatten 10 kann entweder dadurch ausgeführt werden, dass die Stecker 64 manuell von Hand bewegt werden und somit die Pins 62 in die kanalförmigen Öffnungen 58 eingeführt werden oder die Pins 62 von der Greifzange 56 des Roboters 48 gegriffen werden und anschließend von dem Roboter 48 die Pins 62 in die Öffnungen 58 eingeführt werden. Anstelle einer form- und/oder kraftschlüssigen Fixierung der Verbindungselemente 48 an den Gegenverbindungselementen 57 kann auch eine stoffschlüssige Fixierung 46 ausgeführt werden mittels des Lasers 53 an dem Roboter 48. Dieser Vorgang der ordnungsgemäßen Anordnung der Verbindungselemente 44 an den Gegenverbindungselementen 57 wird solange ausgeführt, bis in sämtlichen Bipolarplatten 10 je ein Verbindungselement 44 mechanisch und elektrisch leitend angeordnet ist.

In Fig. 8 und 9 ist ein erstes Ausführungsbeispiel für ein Indikatorelement 59 dargestellt. In Fig. 8 ist die Teilansicht vor der Anordnung des Pins 62 in der Öffnung 58 dargestellt und in Fig. 9 ist die ordnungsgemäße Anordnung des Pins 62 innerhalb der kanalförmigen Öffnung 58 dargestellt. Die kanalförmige Öffnung 58 ist gerade und auch das Verbindungselement 44 als der Pin 62 ist als ein gerader Stift 62 aus Edelstahl ausgebildet. Die Länge des Pins 62 ist größer als die Länge der kanalförmigen Öffnung 58, sodass dadurch nach der ordnungsgemäßen Anordnung des Pins 62 in der Öffnung 58 ein Endbereich des Pins 62 als das Verbindungselement 44 aus der kanalförmigen Öffnung 58 herausragt und damit ein Teilbereich des Verbindungselements 44, welcher aus der Öffnung 58 herausragt, optisch erfassbar, das heißt sichtbar ist. Dieser Teilbereich, welcher aus der Öffnung 58 herausragt, des Verbindungselements 44 bildet damit das Indikatorelement 59, 61, welches gebildet ist von dem Verbindungselement 44. In Fig. 8 befindet sich das Indikatorelement 59, 61 in einer Anfangsposition und in Fig. 9 in der Indikatorposition.

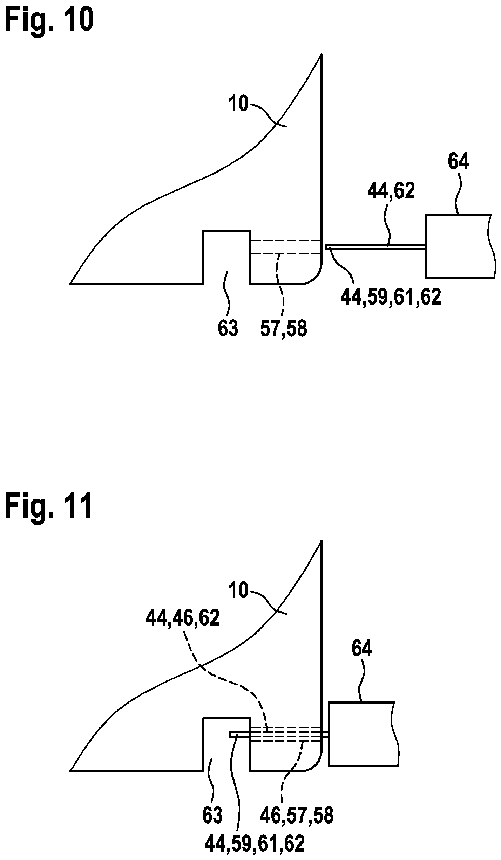

In Fig. 10 und 11 ist ein zweites Ausführungsbeispiel dargestellt. Im Nachfolgenden werden im Wesentlichen nur die Unterschiede zu dem ersten Ausführungsbeispiel beschrieben. Die Öffnung 58 als das Gegenverbindungselement 57 endet in einer Aussparung 63 der Bipolarplatte 10. Nach der ordnungsgemäßen Anordnung des Verbindungselements 44 in dem Gegenverbindungselement 57 überragt somit das Indikatorelement 59, 61, gebildet von dem Verbindungselement 44, nicht den äußeren Rand der Bipolarplatte 10, sondern ist innerhalb der Aussparung 63 angeordnet. Dies hat den Vorteil, dass für das Indikatorelement 59, 61 kein zusätzlicher Bauraum außerhalb des äußeren Randes der Bipolarplatte 10 notwendig ist.

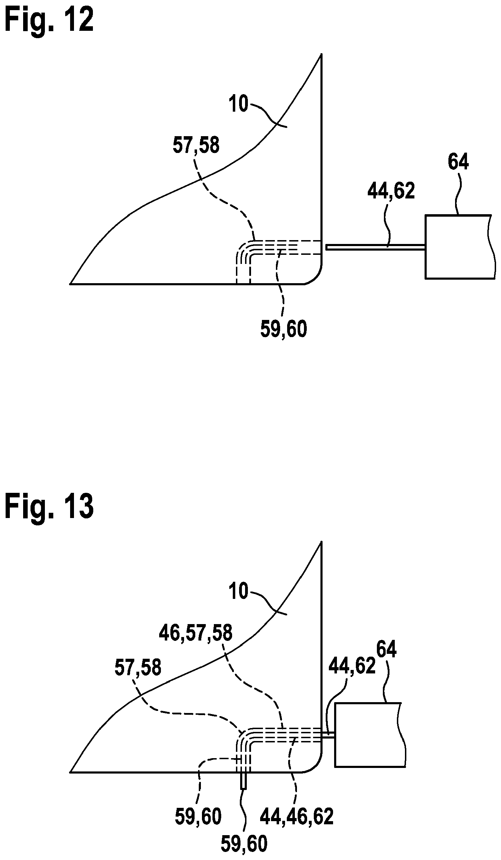

In Fig. 12 und 13 ist ein drittes Ausführungsbeispiel dargestellt. Im Nachfolgenden werden im Wesentlichen nur die Unterschiede zu dem ersten Ausführungsbeispiel beschrieben. In der kanalförmigen Öffnung 58 ist ein Indikatorelement 59, 60 als ein Zusatzindikatorelement 59, 60, d. h. ein ergänzendes Bauteil zusätzlich zu dem Verbindungselement 44 angeordnet. In Fig. 12 ist somit vor der Anordnung und dem Einführen des Verbindungselements 44 in die kanalförmige Öffnung 58 als dem Gegenverbindungselement 57 bereits das biegbare Indikatorelement 59, 60 in dem Gegenverbindungselement 57 angeordnet. Das biegbare Indikatorelement 59, 60 ist beispielsweise aus einem biegbaren Kunststoff ausgebildet. Dabei ist vor dem Anordnen des Verbindungselements 44 innerhalb des Gegenverbindungselements 57 das Indikatorelement 59, 60 vollständig innerhalb des kanalförmigen Gegenverbindungselements 57 angeordnet und damit optisch nicht erfassbar, das heißt optisch nicht sichtbar. Während des Einführens des Verbindungselements 44 in das Gegenverbindungselement 57 kommt es zu einem mechanischen Kontakt zwischen dem Ende des Pins 62 und dem Ende des Indikatorelements 59, 60, sodass dadurch eine kinematische und/oder mechanische Wirkverbindung zwischen dem Verbindungselement 44 und dem Indikatorelement 59, 60 hergestellt wird und somit von dem Verbindungselement 44 während des Einführens eine Druckkraft auf das Indikatorelement 59, 60 aufgebracht wird, sodass dadurch von dem Indikatorelement 59, 60 eine Relativbewegung zwischen der Bipolarplatte 10 und dem Indikatorelement 59, 60 ausgeführt wird und das Indikatorelement 59, 60 aus der kanalförmigen Öffnung 58 herausbewegt wird und ein Teilbereich des Indikatorelements 59, 60 aus der Bipolarplatte 10 herausragt und von außen optisch sichtbar ist (Fig. 13). Aufgrund der gekrümmten kanalförmigen Öffnung 58 wird das Verbindungselement 44 und das Indikatorelement 59, 60 während der Bewegung in der Öffnung 58 gebogen.

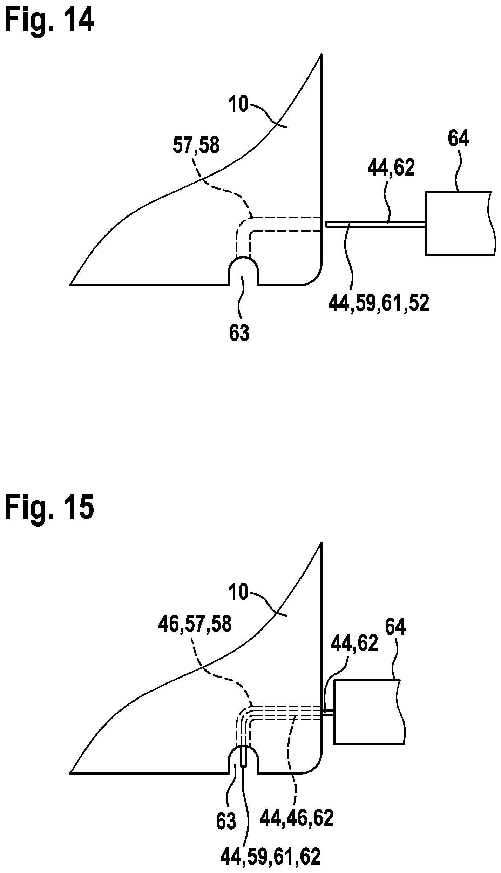

In Fig. 14 und 15 ist ein viertes Ausführungsbeispiel dargestellt. Im Nachfolgenden werden im Wesentlichen nur die Unterschiede zu dem zweiten Ausführungsbeispiel beschrieben. Das Verbindungselement 44 ist aus einem biegbaren und elektrisch leitfähigen Kunststoff ausgebildet. Das Gegenverbindungselement 57 als die kanalförmige Öffnung 58 weist eine Krümmung auf. Während des Einführens des Pins 62 in die kanalförmige Öffnung 58 wird somit eine Biegung an einem Bereich des Pins 62 aufgrund der kanalförmigen Öffnung 58 ausgeführt mit einer Biegung von ungefähr 90°, sodass dadurch bei der ordnungsgemäßen Anordnung des Verbindungselements 44 in dem Gegenverbindungselement 57 gemäß der Darstellung in Fig. 15 ein Teilbereich des Pins 62 in der Aussparung 63 optisch erfassbar ist und damit ein Teilbereich des biegbaren Pins 62 das Indikatorelement 59, 61 ausbildet.

Nach der ordnungsgemäßen Anordnung von sämtlichen Verbindungselementen 44 in den Gegenverbindungselementen 57 befinden sich sämtliche Indikatorelemente 59 in vorgegebenen Indikatorpositionen. Die ordnungsgemäße Anordnung der Verbindungselemente 44 in den Gegenverbindungselementen 57 kann dadurch besonders einfach erfasst werden, indem lediglich die Position der Indikatorelemente 59 optisch geprüft wird, das hießt, ob sich die Indikatorelemente 59 an jeder Bipolarplatte 10 in der vorgegebenen Indikatorposition befinden. Dies kann entweder von einem Monteur mittels Augenschein einfach geprüft werden oder beispielsweise mittels der Kamera 51 an dem Roboterarm 49 des Roboters 48. In dem Computer 55 sind die vorgegebenen Indikatorpositionen der Indikatorelemente 59 gespeichert und diese vorgegebenen Indikatorpositionen können aufgrund der optischen Erfassung der Bipolarplatten 10 auch an entsprechende Fertigungsungenauigkeiten korrigiert und angepasst werden. Soweit sich ein Verbindungselement 44 nicht in der ordnungsgemäßen Anordnung in dem Gegenverbindungselement 57 befindet, beispielsweise aufgrund eines Fertigungsfehlers ein Verbindungselement 44 zwischen zwei Bipolarplatten 10 eingeführt worden ist, kann diese Fehlmontage sofort erkannt werden und entsprechend korrigiert werden oder die Montage wird von dem Roboter 48 abgebrochen und diese Fehlmontage kann anschließend korrigiert werden, manuell von einem Monteur.

Insgesamt betrachtet sind mit der erfindungsgemäßen Brennstoffzelleneinheit 1 und dem erfindungsgemäßen Verfahren zur Herstellung der Brennstoffzelleneinheit 1 wesentliche Vorteile verbunden. Eine Fehlmontage von Verbindungselementen 44 außerhalb der ordnungsgemäßen Anordnung an den Gegenverbindungselementen 57 kann einfach optisch mittels der Indikatorelemente 59 erfasst werden. Damit kann bereits während des Herstellungsprozesses der Brennstoffzelleneinheit 1 ein Montagefehler einfach erkannt werden, sodass dadurch Fehler an der Brennstoffzelleneinheit 1 aufgrund einer nicht ordnungsgemäßen Anordnung der Verbindungselemente 44 an den Gegenverbindungselementen 57 ausgeschlossen sind. Damit wird in vorteilhafter Weise bei der Herstellung der Brennstoffzelleneinheit 1 die Fehlerquote reduziert und die Zuverlässigkeit der hergestellten Brennstoffzelleneinheit 1 erhöht.

## Patentansprüche

1. Brennstoffzelleneinheit (1) als Brennstoffzellenstapel (1) zur elektrochemischen Erzeugung von elektrischer Energie, umfassend
- gestapelt angeordnete Brennstoffzellen (2) mit Protonenaustauschermembranen (5), Anoden (7), Kathoden (8), Gasdiffusionssichten (9) und Bipolarplatten (10),
- Stromleitungen (43) zur elektrischen Verbindung mit den Bipolarplatten (10) der Brennstoffzellen (2) und zur Überwachung der Brennstoffzellen (2) mittels einer Erfassung wenigstens eines Parameters der Brennstoffzellen (2) und die Stromleitungen (43) elektrisch mit Verbindungselementen (44) verbunden sind,
- Verbindungselemente (44) zur Befestigung an den Bipolarplatten (10) mit Fixierungen (46) sowie zur elektrisch leitenden Verbindung mit den Bipolarplatten (10) und die Verbindungselemente (44) elektrisch leitend mit den Stromleitungen (43) verbunden sind, so dass die Stromleitungen (43) elektrisch leitend mittels der Verbindungselemente (44) mit den Bipolarplatten (10) verbunden sind,
- an den Bipolarplatten (10) ausgebildete Gegenverbindungselemente (57) und an den Gegenverbindungselementen (57) die Verbindungselemente (44) mit Fixierungen (46) befestigt sind, so dass die Verbindungselemente (44) elektrisch leitend mit den Gegenverbindungselementen (57) und Bipolarplatten (10) verbunden sind,
**dadurch gekennzeichnet, dass**
an den Bipolarplatten (10) Indikatorelemente (59, 60, 61) ausgebildet sind zur optischen Überwachung der ordnungsgemäßen Anordnung der Verbindungselemente (44) an den Gegenverbindungselementen (57) und die Indikatorelemente von außerhalb des Brennstoffzellenstapels (1) optisch erfassbar sind.

2. Brennstoffzelleneinheit nach Anspruch 1,
**dadurch gekennzeichnet, dass**
die Verbindungselemente (44) als Bolzen (62), Stifte (62) oder Pins (62) an den Stromleitungen (43) ausgebildet sind und die Gegenverbindungselemente (57) als Öffnungen (58) oder Bohrungen (58) an den Bipolarplatten (10) ausgebildet sind oder umgekehrt.

3. Brennstoffzelleneinheit nach Anspruch 1 oder 2,
**dadurch gekennzeichnet, dass**
die Indikatorelemente (59, 61) aus den Bipolarplatten (10) herausragen, insbesondere die Länge der Verbindungselemente (44) größer ist als die Länge der Gegenverbindungselemente (57), so dass Teilbereiche der Verbindungselemente (44) aus den Gegenverbindungselemente (57) herausragen und die Teilbereiche der Verbindungselemente (44) als Indikatorelemente (59, 61) optisch erfassbar sind.

4. Brennstoffzelleneinheit nach einem oder mehreren der vorhergehenden Ansprüche,
**dadurch gekennzeichnet, dass**
in den Bipolarplatten (10) Aussparungen (63) ausgebildet sind und die Indikatorelemente (59, 60, 61) durch die Aussparungen (63) von außerhalb des Brennstoffzellenstapels (1) optisch erfassbar sind.

5. Brennstoffzelleneinheit nach einem oder mehreren der vorhergehenden Ansprüche,
**dadurch gekennzeichnet, dass**
die Brennstoffzelleneinheit (1) eine Überwachungseinheit (37) als Recheneinheit (37) zur Überwachung des wenigstens einen Parameter der Brennstoffzellen (2) umfasst.

6. Brennstoffzelleneinheit nach Anspruch 5,
**dadurch gekennzeichnet, dass**
die Brennstoffzelleneinheit (1) eine Datenübertragungsvorrichtung (38, 43) zur Übertragung von Daten hinsichtlich des wenigstens einen zu erfassenden Parameters der Brennstoffzellen (2) von dem Stromleitungen (43) zu der Überwachungseinheit (37) umfasst.

7. Verfahren zur Herstellung einer Brennstoffzelleneinheit (1) als Brennstoffzellenstapel (1) zur elektrochemischen Erzeugung von elektrischer Energie mit den Schritten:
- zur Verfügung stellen einer Brennstoffzelleneinheit (1) mit gestapelt angeordneten Brennstoffzellen (2), die Brennstoffzellen (2) umfassend Protonenaustauschermembranen (5), Anoden (7), Kathoden (8), Gasdiffusionssichten (9) und Bipolarplatten (10) mit Gegenverbindungselementen (57),
- zur Verfügung stellen von Stromleitungen (43) zur elektrischen Verbindung mit den Bipolarplatten (10) der Brennstoffzellen (2) und zur Überwachung wenigstens eines Parameters der Brennstoffzellen (2),
- zur Verfügung stellen von Verbindungselementen (44), welche elektrisch leitend mit den Stromleitungen (43) verbunden sind,
- elektrisches Verbinden der Stromleitungen (43) mit den Bipolarplatten (10) indem die Verbindungselemente (44) an Gegenverbindungselementen (57) der Bipolarplatten (10) mit Fixierungen (46) befestigt werden und die Verbindungselemente (44) elektrisch leitend mit den Gegenverbindungselementen (57) an den Bipolarplatten (10) verbunden werden,
**dadurch gekennzeichnet, dass**
während des Fixierens der Verbindungselemente (44) an den Gegenverbindungselementen (57) von Indikatorelementen (59, 60, 61) eine Relativbewegung zwischen den Bipolarplatten (10) und den Indikatorelementen (59. 60. 61) ausgeführt wird, so dass nach der ordnungsgemäßen Fixierung der Verbindungselemente (44) an den Gegenverbindungselementen (57) die Indikatorelemente (59, 60, 61) von außerhalb des Brennstoffzellenstapels (1) optisch erfassbar sind.

8. Verfahren nach Anspruch 7,
**dadurch gekennzeichnet, dass**
vor dem Einführen der Verbindungselemente (44) in die Gegenverbindungselemente (57) die Indikatorelemente (59, 60, 61) von außerhalb des Brennstoffzellenstapels (1) nicht optisch erfassbar sind, insbesondere nicht an vorgegebenen Indikatorpositionen an den Bipolarplatten (10) optisch erfassbar sind.

9. Verfahren nach Anspruch 7 oder 8,
**dadurch gekennzeichnet, dass**
die Indikatorelemente (59, 60, 61) von außerhalb des Brennstoffzellenstapels (1) in vorgegebenen Indikatorpositionen an den Bipolarplatten (10) optisch erfassbar sind, falls die Verbindungselemente (44) ordnungsgemäß an den Gegenverbindungselementen (57) befestigt worden sind.

10. Verfahren nach einem oder mehreren der Ansprüche 7 bis 9,
**dadurch gekennzeichnet, dass**
die Relativbewegung zwischen den Bipolarplatten (10) und den Indikatorelementen (59, 60, 61) ausgeführt wird aufgrund einer kinematischen und/oder mechanischen Wirkverbindung zwischen den Verbindungselementen (44) und den Indikatorelementen (57).

11. Verfahren nach einem oder mehreren der Ansprüche 7 bis 10,
**dadurch gekennzeichnet, dass**
die Indikatorelemente (59, 61) von den Verbindungselementen (44) oder Zusatzindikatorelementen (59, 60) als gesonderte Bauteile in Ergänzung zu den Verbindungselementen (44) gebildet sind.

12. Verfahren nach einem oder mehreren der Ansprüche 7 bis 11,
**dadurch gekennzeichnet, dass**
die Verbindungselemente (44) als Bolzen (62), Stifte (62) oder Pins (62) an den Stromleitungen (43) ausgebildet sind und die Gegenverbindungselemente (57) als, vorzugsweise kanalförmige, Öffnungen (58) oder Bohrungen (58) an den Bipolarplatten (10) ausgebildet sind oder umgekehrt.

13. Verfahren nach einem oder mehreren der Ansprüche 7 bis 12,
**dadurch gekennzeichnet, dass**
die Öffnungen (58) oder Bohrungen (58) und die Verbindungselemente (44) dahingehend ausgebildet sind, so dass nach der ordnungsgemäßen Fixierung der Verbindungselemente (44) an den Gegenverbindungselementen (57) die Verbindungselemente (44) aus den Öffnungen (58) oder Bohrungen (58) heraus ragen und die Teilbereiche der Verbindungselemente (44), welche aus den Öffnungen (58) oder Bohrungen (58) heraus ragen und durch die Gegenverbindungselemente (57) bewegt worden sind, die Indikatorelemente (59, 61) bilden und die Teilbereiche der Verbindungselemente (44) von außerhalb des Brennstoffzellenstapels (1) optisch erfassbar sind.

14. Verfahren nach einem oder mehreren der Ansprüche 7 bis 13,
**dadurch gekennzeichnet, dass**
die Verbindungselemente (44) mit einem Roboter (44) an den Gegenverbindungselementen (57) der Bipolarplatten (10) befestigt werden mittels einer Relativbewegung zwischen den Verbindungselementen (44) und den Gegenverbindungselementen (57).

15. Verfahren nach einem oder mehreren der Ansprüche 7 bis 14,
**dadurch gekennzeichnet, dass**
von einer Kamera (51) die gestapelten Bipolarplatten (10) und/oder die Indikatorelemente (59, 60, 61) optisch erfasst werden, die Daten der Kamera (51) von einem Computer (55) mit einer Bildverarbeitungssoftware ausgewertet werden und in Abhängigkeit von der mittels der Bildverarbeitungssoftware ermittelten Daten zu den Positionen der Bipolarplatten (10) und/oder Indikatorelemente (59, 60, 61), insbesondere zu Indikatorpositionen der Indikatorelemente (59, 60, 61), die ordnungsgemäßen Anordnung der Verbindungselemente (44) in den Gegenverbindungselementen (57) überwacht wird.

## Claims

1. Fuel cell unit (1) as a fuel cell stack (1) for electrochemically generating electrical energy, comprising
- fuel cells (2) which are arranged in a stacked manner and have proton exchange membranes (5), anodes (7), cathodes (8), gas diffusion layers (9) and bipolar plates (10),
- power lines (43) for electrical connection to the bipolar plates (10) of the fuel cells (2) and for monitoring the fuel cells (2) by means of detecting at least one parameter of the fuel cells (2), and the power lines (43) are electrically connected to connection elements (44),
- connection elements (44) for fastening to the bipolar plates (10) using fixing means (46) and for electrically conductive connection to the bipolar plates (10), and the connection elements (44) are electrically conductively connected to the power lines (43), so that the power lines (43) are electrically conductively connected to the bipolar plates (10) by means of the connection elements (44),
- mating connection elements (57) which are formed on the bipolar plates (10), and the connection elements (44) are fastened to the mating connection elements (57) using fixing means (46), so that the connection elements (44) are electrically conductively connected to the mating connection elements (57) and bipolar plates (10),
**characterized in that**
indicator elements (59, 60, 61) are formed on the bipolar plates (10) for optically monitoring for the correct arrangement of the connection elements (44) on the mating connection elements (57), and the indicator elements can be optically detected from outside the fuel cell stack (1).

2. Fuel cell unit according to Claim 1,
**characterized in that**
the connection elements (44) are in the form of bolts (62), pegs (62) or pins (62) on the power lines (43) and the mating connection elements (57) are in the form of openings (58) or bores (58) in the bipolar plates (10), or vice versa.

3. Fuel cell unit according to Claim 1 or 2,
**characterized in that**
the indicator elements (59, 61) protrude from the bipolar plates (10), in particular the length of the connection elements (44) is greater than the length of the mating connection elements (57), so that subregions of the connection elements (44) protrude from the mating connection elements (57) and the subregions of the connection elements (44) can be optically detected as indicator elements (59, 61).

4. Fuel cell unit according to one or more of the preceding claims,
**characterized in that**
recesses (63) are formed in the bipolar plates (10) and the indicator elements (59, 60, 61) can be optically detected from outside the fuel cell stack (1) through the recesses (63).

5. Fuel cell unit according to one or more of the preceding claims,
**characterized in that**
the fuel cell unit (1) comprises a monitoring unit (37) as a computing unit (37) for monitoring the at least one parameter of the fuel cells (2).

6. Fuel cell unit according to Claim 5,
**characterized in that**
the fuel cell unit (1) comprises a data transmission device (38, 43) for transmitting data in respect of the at least one parameter, to be detected, of the fuel cells (2) from the power lines (43) to the monitoring unit (37).

7. Method for producing a fuel cell unit (1) as a fuel cell stack (1) for electrochemically generating electrical energy, comprising the steps of:
- providing a fuel cell unit (1) comprising fuel cells (2) which are arranged in a stacked manner, the fuel cells (2) comprising proton exchange membranes (5), anodes (7), cathodes (8), gas diffusion layers (9) and bipolar plates (10) having mating connection elements (57),
- providing power lines (43) for electrical connection to the bipolar plates (10) of the fuel cells (2) and for monitoring at least one parameter of the fuel cells (2),
- providing connection elements (44), which are electrically conductively connected to the power lines (43),
- electrically connecting the power lines (43) to the bipolar plates (10) by way of the connection elements (44) being fastened to mating connection elements (57) of the bipolar plates (10) using fixing means (46) and the connection elements (44) being electrically conductively connected to the mating connection elements (57) on the bipolar plates (10),
**characterized in that**
during the fixing of the connection elements (44) to the mating connection elements (57) indicator elements (59, 60, 61) execute a relative movement between the bipolar plates (10) and the indicator elements (59, 60, 61), so that the indicator elements (59, 60, 61) can be optically detected from outside the fuel cell stack (1) after the correct fixing of the connection elements (44) to the mating connection elements (57).

8. Method according to Claim 7,
**characterized in that**
before the insertion of the connection elements (44) into the mating connection elements (57) the indicator elements (59, 60, 61) cannot be optically detected, in particular cannot be optically detected at specified indicator positions on the bipolar plates (10), from outside the fuel cell stack (1).

9. Method according to Claim 7 or 8,
**characterized in that**
the indicator elements (59, 60, 61) can be optically detected from outside the fuel cell stack (1) in specified indicator positions on the bipolar plates (10) if the connection elements (44) have been correctly fastened to the mating connection elements (57).

10. Method according to one or more of Claims 7 to 9,
**characterized in that**
the relative movement between the bipolar plates (10) and the indicator elements (59, 60, 61) is executed due to a kinematic and/or mechanical operative connection between the connection elements (44) and the indicator elements (57).

11. Method according to one or more of Claims 7 to 10,
**characterized in that**
the indicator elements (59, 61) are formed by the connection elements (44) or additional indicator elements (59, 60) as separate components in addition to the connection elements (44).

12. Method according to one or more of Claims 7 to 11,
**characterized in that**
the connection elements (44) are in the form of bolts (62), pegs (62) or pins (62) on the power lines (43) and the mating connection elements (57) are in the form of, preferably channel-like, openings (58) or bores (58) in the bipolar plates (10), or vice versa.

13. Method according to one or more of Claims 7 to 12,
**characterized in that**
the openings (58) or bores (58) and the connection elements (44) are formed in such a way that, after the correct fixing of the connection elements (44) to the mating connection elements (57), the connection elements (44) protrude from the openings (58) or bores (58) and the subregions of the connection elements (44) which protrude from the openings (58) or bores (58) and have been moved by the mating connection elements (57) form the indicator elements (59, 61) and the subregions of the connection elements (44) can be optically detected from outside the fuel cell stack (1).

14. Method according to one or more of Claims 7 to 13,
**characterized in that**
the connection elements (44) are fastened to the mating connection elements (57) of the bipolar plates (10) by means of a relative movement between the connection elements (44) and the mating connection elements (57) using a robot (44).

15. Method according to one or more of Claims 7 to 14,
**characterized in that**
the stacked bipolar plates (10) and/or the indicator elements (59, 60, 61) are optically detected by a camera (51), the data in the camera (51) are evaluated by a computer (55) using image processing software and the correct arrangement of the connection elements (44) in the mating connection elements (57) is monitored depending on the data determined by means of the image processing software and relating to the positions of the bipolar plates (10) and/or indicator elements (59, 60, 61), in particular relating to indicator positions of the indicator elements (59, 60, 61).

## Revendications

1. Unité de piles à combustible (1) sous forme d'empilement de piles à combustible (1) pour la production électrochimique d'énergie électrique, comprenant
- des piles à combustible (2) disposées de manière empilée, comprenant des membranes échangeuses de protons (5), des anodes (7), des cathodes (8), des couches de diffusion de gaz (9) et des plaques bipolaires (10),
- des lignes électriques (43) destinées à la connexion électrique avec les plaques bipolaires (10) des piles à combustible (2) et destinées à la surveillance des piles à combustible (2) au moyen d'une acquisition d'au moins un paramètre des piles à combustible (2) et les lignes électriques (43) sont reliées électriquement à des éléments de connexion (44),
- des éléments de connexion (44) destinés à la fixation aux plaques bipolaires (10) avec des éléments de fixation (46) ainsi que pour la liaison électriquement conductrice avec les plaques bipolaires (10) et les éléments de connexion (44) sont reliés de manière électriquement conductrice aux lignes électriques (43), de sorte que les lignes électriques (43) sont reliées de manière électriquement conductrice aux plaques bipolaires (10) au moyen des éléments de connexion (44),
- des éléments de connexion complémentaires (57) formés sur les plaques bipolaires (10) et les éléments de connexion (44) sont fixés aux éléments de connexion complémentaires (57) par des éléments de fixation (46), de sorte que les éléments de connexion (44) sont reliés de manière électriquement conductrice aux éléments de connexion complémentaires (57) et aux plaques bipolaires (10),
**caractérisée en ce que**
des éléments indicateurs (59, 60, 61) sont formés sur les plaques bipolaires (10) pour la surveillance optique de la disposition correcte des éléments de connexion (44) au niveau des éléments de connexion complémentaires (57) et les éléments indicateurs peuvent être détectés optiquement depuis l'extérieur de l'empilement de piles à combustible (1).

2. Unité de piles à combustible selon la revendication 1,
**caractérisée en ce que**
les éléments de connexion (44) sont réalisés sous la forme de boulons (62), de tiges (62) ou de broches (62) au niveau des lignes électriques (43) et les éléments de connexion complémentaires (57) sont réalisés sous la forme d'ouvertures (58) ou de perçages (58) au niveau des plaques bipolaires (10) ou inversement.

3. Unité de piles à combustible selon la revendication 1 ou 2,
**caractérisée en ce que**
les éléments indicateurs (59, 61) font saillie hors des plaques bipolaires (10), la longueur des éléments de connexion (44) est notamment supérieure à la longueur des éléments de connexion complémentaires (57), de sorte que des zones partielles des éléments de connexion (44) font saillie hors des éléments de connexion complémentaires (57) et les zones partielles des éléments de connexion (44) peuvent être détectées optiquement en tant qu'éléments indicateurs (59, 61).

4. Unité de piles à combustible selon une ou plusieurs des revendications précédentes,
**caractérisée en ce que**
des évidements (63) sont formés dans les plaques bipolaires (10) et les éléments indicateurs (59, 60, 61) peuvent être détectés optiquement à travers les évidements (63) depuis l'extérieur de l'empilement de piles à combustible (1).

5. Unité de piles à combustible selon une ou plusieurs des revendications précédentes,
**caractérisée en ce que**
l'unité de piles à combustible (1) comprend une unité de surveillance (37) sous la forme d'une unité de calcul (37) destinée à la surveillance d'au moins un paramètre des piles à combustible (2).

6. Unité de piles à combustible selon la revendication 5,
**caractérisée en ce que**
l'unité de piles à combustible (1) comprend un dispositif de transmission de données (38, 43) destiné à la transmission de données concernant l'au moins un paramètre à acquérir des piles à combustible (2) par les lignes électriques (43) vers l'unité de surveillance (37).

7. Procédé de fabrication d'une unité de piles à combustible (1) sous forme d'empilement de piles à combustible (1) pour la production électrochimique d'énergie électrique, comprenant les étapes suivantes :
- mise à disposition d'une unité de piles à combustible (1) comprenant des piles à combustible (2) disposées de manière empilée, les piles à combustible (2) comprenant des membranes échangeuses de protons (5), des anodes (7), des cathodes (8), des couches de diffusion de gaz (9) et des plaques bipolaires (10) pourvues d'éléments de liaison complémentaires (57),
- mise à disposition de lignes électriques (43) destinées à la connexion électrique avec les plaques bipolaires (10) des piles à combustible (2) et destinées à la surveillance d'au moins un paramètre des piles à combustible (2),
- mise à disposition d'éléments de connexion (44) qui sont reliés de manière électriquement conductrice aux lignes électriques (43),
- connexion électrique des lignes électriques (43) aux plaques bipolaires (10) en fixant les éléments de connexion (44) à des éléments de connexion complémentaires (57) des plaques bipolaires (10) avec des éléments de fixation (46) et en reliant de manière électriquement conductrice les éléments de connexion (44) aux éléments de connexion complémentaires (57) au niveau des plaques bipolaires (10),
**caractérisé en ce que**
pendant la fixation des éléments de connexion (44) aux éléments de connexion complémentaires (57) d'éléments indicateurs (59, 60, 61), un mouvement relatif est effectué entre les plaques bipolaires (10) et les éléments indicateurs (59, 60, 61), de sorte qu'après la fixation correcte des éléments de connexion (44) aux éléments de connexion complémentaires (57), les éléments indicateurs (59, 60, 61) peuvent être détectés optiquement depuis l'extérieur de l'empilement de piles à combustible (1).

8. Procédé selon la revendication 7,
**caractérisé en ce que**
avant l'introduction des éléments de connexion (44) dans les éléments de connexion complémentaires (57), les éléments indicateurs (59, 60, 61) ne peuvent pas être détectés optiquement depuis l'extérieur de l'empilement de piles à combustible (1), ne peuvent notamment pas être détectés optiquement à des positions d'indicateurs prédéterminées sur les plaques bipolaires (10).

9. Procédé selon la revendication 7 ou 8,
**caractérisé en ce que**
les éléments indicateurs (59, 60, 61) peuvent être détectés optiquement depuis l'extérieur de l'empilement de piles à combustible (1) dans des positions d'indicateur prédéterminées sur les plaques bipolaires (10), dans le cas où les éléments de connexion (44) ont été fixés correctement aux éléments de connexion complémentaires (57).

10. Procédé selon une ou plusieurs des revendications 7 à 9,
**caractérisé en ce que**
le mouvement relatif entre les plaques bipolaires (10) et les éléments indicateurs (59, 60, 61) est effectué en raison d'une liaison active cinématique et/ou mécanique entre les éléments de connexion (44) et les éléments indicateurs (57).

11. Procédé selon une ou plusieurs des revendications 7 à 10,
**caractérisé en ce que**
les éléments indicateurs (59, 61) sont formés par les éléments de connexion (44) ou des éléments indicateurs supplémentaires (59, 60) sous la forme de composants séparés en complément des éléments de connexion (44).

12. Procédé selon une ou plusieurs des revendications 7 à 11,
**caractérisé en ce que**
les éléments de connexion (44) sont réalisés sous la forme de boulons (62), de tiges (62) ou de broches (62) au niveau des lignes électriques (43) et les éléments de connexion complémentaires (57) sont réalisés sous la forme d'ouvertures (58) ou de perçages (58), de préférence en forme de canaux, au niveau des plaques bipolaires (10) ou inversement.

13. Procédé selon une ou plusieurs des revendications 7 à 12,
**caractérisé en ce que**
les ouvertures (58) ou les perçages (58) et les éléments de connexion (44) sont configurés de telle sorte qu'après la fixation correcte des éléments de connexion (44) aux éléments de connexion complémentaires (57), les éléments de connexion (44) font saillie hors des ouvertures (58) ou des perçages (58) et les zones partielles des éléments de connexion (44), lesquelles font saillie hors des ouvertures (58) ou des perçages (58) et qui ont été déplacées par les éléments de connexion complémentaires (57), forment les éléments indicateurs (59, 61) et les zones partielles des éléments de connexion (44) peuvent être détectées optiquement depuis l'extérieur de l'empilement de piles à combustible (1).

14. Procédé selon une ou plusieurs des revendications 7 à 13,
**caractérisé en ce que**
les éléments de connexion (44) sont fixés par un robot (44) aux éléments de connexion complémentaires (57) des plaques bipolaires (10) au moyen d'un mouvement relatif entre les éléments de connexion (44) et les éléments de connexion complémentaires (57).

15. Procédé selon une ou plusieurs des revendications 7 à 14,
**caractérisé en ce que**
les plaques bipolaires (10) empilées et/ou les éléments indicateurs (59, 60, 61) sont détectés optiquement par un appareil de prise de vues (51), les données de l'appareil de prise de vues (51) sont évaluées par un ordinateur (55) doté d'un logiciel de traitement d'images et la disposition correcte des éléments de connexion (44) dans les éléments de connexion complémentaires (57) est surveillée en fonction des données déterminées au moyen du logiciel de traitement d'images à propos des positions des plaques bipolaires (10) et/ou des éléments indicateurs (59, 60, 61), en particulier des positions d'indicateur des éléments indicateurs (59, 60, 61).
